# EUROPEAN PATENT SPECIFICATION

(11) **EP 3 890 281 B1**
(45) Date of publication and mention of the grant of the patent: **09.08.2023**
(21) Application number: 18943988.8
(22) Date of filing: 17.12.2018
(51) Int. Cl.: H04M 1/02, G06F 1/16, H04N 7/14

(54) **CAMERA MOUNTING MODULE, CAMERA ASSEMBLY AND MOBILE TERMINAL**
KAMERABEFESTIGUNGSMODUL, KAMERAANORDNUNG UND MOBILES ENDGERÄT
MODULE DE MONTAGE DE CAMÉRA, ENSEMBLE CAMÉRA ET TERMINAL MOBILE

(43) Date of publication of application: 06.10.2021
(73) Proprietor: GUANGDONG OPPO MOBILE TELECOMMUNICATIONS CORP., LTD., Dongguan, Guangdong 523860 (CN)
(72) Inventor: HUANG, Maozhao, Dongguan, Guangdong 523860 (CN); YANG, Zimei, Dongguan, Guangdong 523860 (CN)
(74) Representative: Manitz Finsterwald Patent- und Rechtsanwaltspartnerschaft mbB
(86) International application number: PCT/CN2018/121619
(87) International publication number: WO 2020/124339

(56) References cited:
- EP-A2- 2 974 057
- EP-B1- 2 974 057
- CN-A- 109 005 264
- US-A1- 2015 377 323

## Description

### TECHNICAL FIELD

The disclosure relates to a technical field of mobile terminals, and particularly to a camera mounting module, a camera assembly and a mobile terminal.

### BACKGROUND

In relevant technical fields, a mobile terminal such as a smartphone is equipped with a front camera at a side where a display is located. Since the front camera takes up some space at the side where the display is located, the display has a limited coverage on the front of the smartphone, which is not conducive for the smart phone to achieve a high screen-to-body ratio. Generally, mobile terminals such as a smartphone may be equipped with a rear camera in a rear housing thereof, and the rear camera may destroy the integrity of the rear housing, which is not conducive to improving appearance and performance of the smartphone. The features of the preamble of the independent claim are known from CN 109 005 264 A and US 2015/377323 A1.

### SUMMARY

The invention is defined by the independent claim. Based on the above, a camera mounting module, a camera assembly and a mobile terminal are provided herein.

A mobile terminal, comprising: a body comprising a display and defining an accommodation slot; a camera mounting assembly comprising a mounting base and a camera positioned in the mounting base, the mounting base being positioned in the accommodation slot and capable of rotating within the accommodation slot; an internal gear coupled to the mounting base; and a driving mechanism comprising an actuator, a first gear and at least one second gear, the at least one second gear being arranged between the first gear and the internal gear, the first gear and the at least one second gear being located within the internal gear, and each of the at least one second gear being respectively engaged with the first gear and the internal gear; wherein the actuator is configured to drive the mounting base to rotate from a first position to a second position through the first gear, the at least one second gear and the internal gear, the camera is received in the accommodation slot when the mounting base is located in the first position, and an incident surface of the camera is exposed out of the body when the mounting base is located in the second position.

In an embodiment, the mounting base defines a mounting groove, the internal gear is positioned in the mounting groove and coupled to a sidewall of the mounting groove.

In an embodiment, the driving mechanism is wholly positioned within the mounting groove along a direction to which a rotation axis of the mounting base extends, or the driving mechanism is partially positioned in the mounting groove along a direction to which a rotation axis of the mounting base extends.

In an embodiment, the internal gear and the mounting base are integrally formed, or the internal gear and the mounting base are detachably coupled.

In an embodiment, the internal gear is positioned on an external surface of the mounting base.

In an embodiment, the internal gear and the mounting base are integrally formed, or the internal gear and the mounting base are detachably coupled.

In an embodiment, the actuator is fixed to the mounting base, the internal gear is fixed to the body.

In an embodiment, the internal gear and the mounting base are integrally formed, or the internal gear and the mounting base are detachably coupled.

In an embodiment, the first gear is coupled to a power-output shaft of the actuator, or the at least one second gear is coupled to a power-output shaft of the actuator.

In an embodiment, the mounting base is located in the second position, the incident surface of the camera is exposed out of a surface of the body on which the display is located.

In an embodiment, the mounting base is located in the second position, the incident surface of the camera is exposed out of a surface of the body opposite to the display.

In an embodiment, the number of the at least one second gear is three or more, all of the at least one second gear are uniformly-spaced arranged along a circumferential direction of the first gear.

In an embodiment, the driving mechanism comprises a mounting frame, one of the mounting frame and the at least one second gear defines a positioning hole, the other of the mounting frame and the at least one second gear is provided with a positioning shaft, and the positioning shaft passes through the positioning hole.

In an embodiment, In an embodiment, an orthographic projection of the mounting base on a reference plane is a shape of major arc.

In an embodiment, an orthographic projection of the mounting base on a reference plane is a rectangular or a rounded rectangular shape.

In an embodiment, the body comprises a first EHF chip, the camera mounting assembly comprises a second EHF chip positioned in the mounting base, and the second EHF chip is configured to communicate with the camera; when the mounting base is located in the second position, the second EHF chip pairs with the first EHF chip in which case the first EHF chip can communicate with the second EHF chip.

In an unclaimed embodiment, the display comprises a flat region, a rotation axis of the mounting base is perpendicular to a reference plane, and the reference plane is a plane in which the flat region is located.

In an unclaimed embodiment, the rotation axis of the mounting base passes through a center of the reference line, and the reference line is a line between two points which have a max distance in an orthographic projection of the mounting base in the reference plane.

In an unclaimed embodiment, the rotation axis of the mounting base passes through a center of a circumscribed circle of an orthographic projection of the mounting base in the reference plane.

In an unclaimed embodiment, the body comprises a front surface, a rear surface opposite to the front surface and a side surface between the front surface and the rear surface, the side surface comprises a first face, a second face, a third face opposite to the first face, and a forth face opposite to the forth face; the first face is connected to one end of each of the third face and a forth face, the second face is connected to the other end of each of the third face and a forth face; wherein the first face, the second face, the third face and the forth face are connected in sequence to form a closed rectangular frame, an length of the third face is larger than of the first face, and the accommodation slot is defined in the first face, and the display is positioned in the front surface.

In an unclaimed embodiment, the mounting base comprises: a first external surface, an orthographic projection of which in the reference plane is an arc; and a second external surface, an orthographic projection of which in the reference plane is a line; when the mounting base is located in the first position, the first peripheral surface is flush with the first face, and when the mounting base is located in the second position, the first peripheral surface intersects with the first face.

In an unclaimed embodiment, an orthographic projection of the mounting base in the reference plane when the mounting base is located in the first position is symmetrical to an orthographic projection of the mounting base in the reference plane when the mounting base is located in the second position with respect to a center of an orthographic projection of the rotation axis of the mounting base in the reference plane.

### BRIEF DESCRIPTION OF DRAWINGS

For purposes of better description of embodiments of the disclosure or prior arts, drawings accompanying the embodiments or the prior arts will be simply introduced below. Obviously, the accompanying drawings described below are merely some embodiments of the disclosure, and those skilled in the art may obtain other accompanying drawings without making any creative efforts based on these accompanying drawings.
Fig. 1 is a mounting base of a mobile terminal in a first position, according to an embodiment of the disclosure
Fig. 2 is a front view of the mobile terminal mentioned in Fig. 2.
Fig. 3 is a rear view of the mobile terminal mentioned in Fig. 2.
Fig. 4 is a rear view of the mobile terminal mentioned in Fig. 2.
Fig. 5 is a right view of the mobile terminal mentioned in Fig. 2.
Fig. 6 is a top view of the mobile terminal mentioned in Fig. 2.
Fig. 7 is a bottom view of the mobile terminal mentioned in Fig. 2.
Fig. 8 is the mounting base of the mobile terminal in a second position, according to the embodiment mentioned in Fig. 2.
Fig. 9 is an another view of the mobile terminal mentioned in Fig. 8.
Fig. 10 is a schematic connection view of the mounting base and a driving mechanism, according to the embodiment mentioned in Fig. 1.
Fig. 11 is an exploded schematic view of the mounting base and the driving mechanism, according to the embodiment mentioned in Fig. 10.
Fig. 12a is a front view of the mounting base mentioned in Fig. 10.
Fig. 12b is a schematic view of the mounting base according to another embodiment.
Fig. 12c is a schematic view of the mounting base according to a yet another embodiment.
Fig. 12d is a side view of the mounting base mentioned in Fig. 12c.
Fig. 13 is an sectional view of the mounting base along the line II-II shown in Fig. 12a.
Fig. 14 is a view of an electromotor and the body coupled to the electromotor according to the embodiment shown in Fig. 13.
Fig. 15 is a foldable mobile terminal in an unfolded state according to an unclaimed embodiment of the disclosure.
Fig. 16 is a foldable mobile terminal in a folded state according to a yet another unclaimed embodiment of the disclosure.
Fig. 17 is an exploded view of the foldable mobile terminal shown in Fig. 15.
Fig. 18 is a top view of the foldable mobile terminal shown in Fig. 15.
Fig. 19 is a front view of a mounting base of the foldable mobile terminal in a first position according to the unclaimed embodiment shown in Fig. 15.
Fig. 20 is a mounting base of the foldable mobile terminal in a second position according to the unclaimed embodiment shown in Fig. 15.
Fig. 21 is a schematic view of a foldable mechanism of the foldable mobile terminal shown in Fig. 17.
Fig. 22 is an exploded schematic view of the foldable mobile terminal according to the unclaimed embodiment shown in Fig. 21.

### DETAILED DESCRIPTION

As used herein, a "terminal device" includes, but is not limited to, a device that is configured to receive/transmit communication signals:
(1) via a wireline connection, such as via a public-switched telephone network (PSTN), digital subscriber line (DSL), digital cable, a direct cable connection, and/or another data connection/network;
(2) via a wireless interface with, for example, a cellular network, a wireless local area network (WLAN) a digital television network such as a DVB-H network, a satellite network, an AM/FM broadcast transmitter, and/or another communication terminal;
A communication terminal that is configured to communicate over a wireless interface may be referred to as a "mobile terminal." Examples of mobile terminals include, but are not limited to:
(1) a satellite or cellular radiotelephone;
(2) a Personal Communications System (PCS) terminal that may combine a cellular radiotelephone with data processing, facsimile and data communications capabilities;
(3) a PDA that can include a radiotelephone, pager, Internet/intranet access, Web browser, organizer, calendar and/or a global positioning system (GPS) receiver;
(4) a conventional laptop and/or palmtop receiver
(5) a conventional laptop and/or palmtop appliance that includes a radiotelephone transceiver.

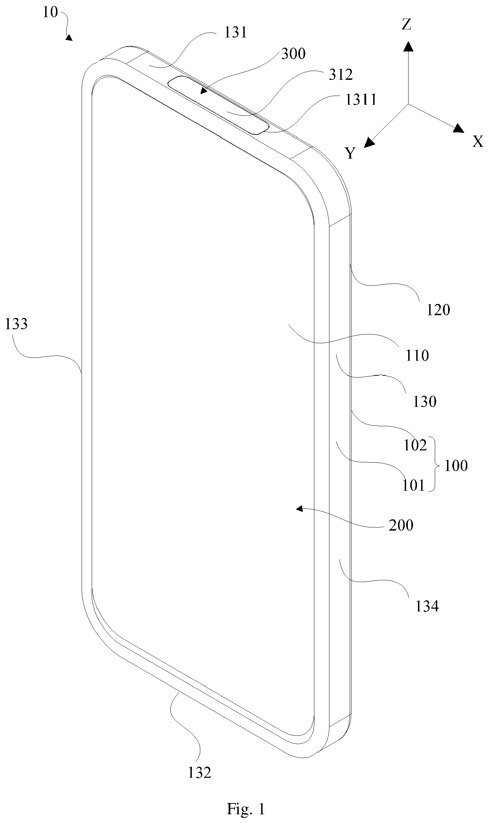

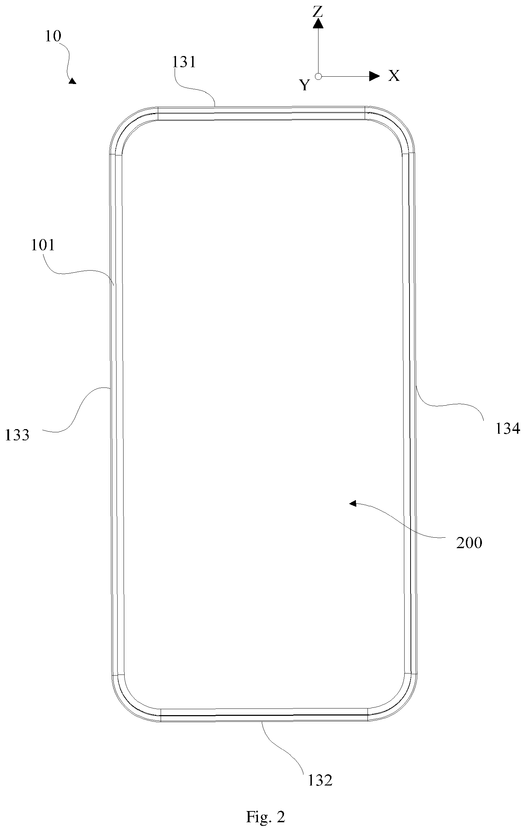

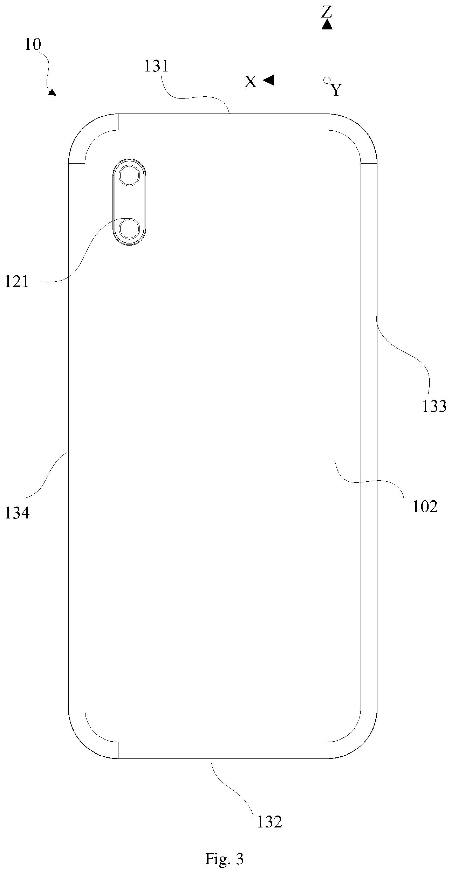

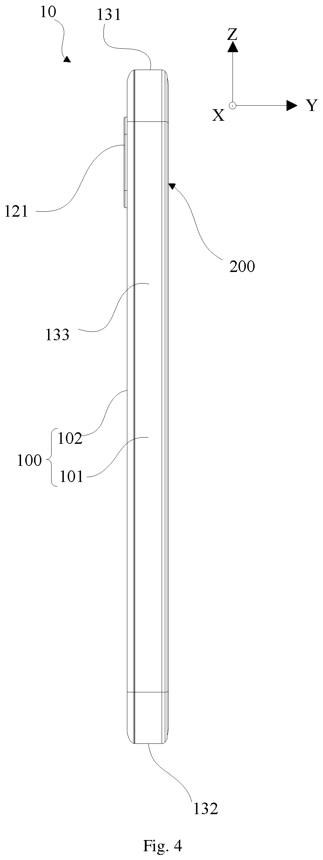

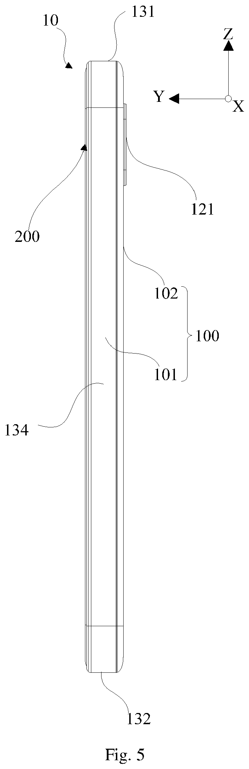

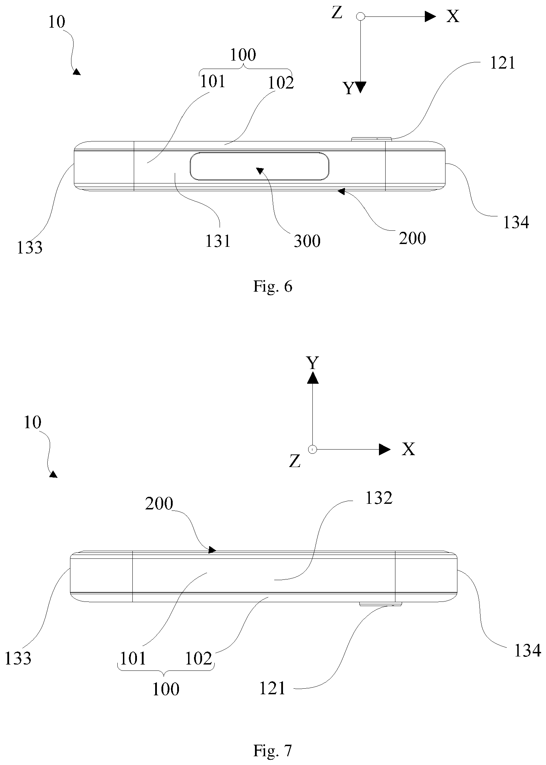

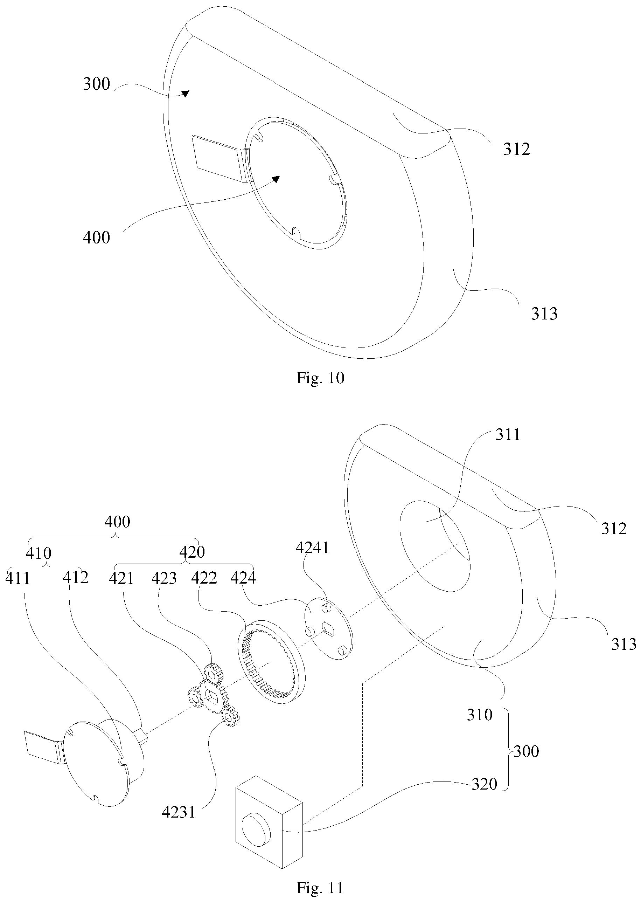

Referring to Figs. 1 to 7, in an embodiment, a mobile terminal 10 is illustrated by taking a cellphone as an example. The terminal device 10 includes a body 100, a camera mounting assembly 300, and a driving mechanism 400 (shown in Fig. 10). The body 100 includes a front surface 110, a rear surface 120 opposite to the front surface 110, and a side surface 130 between the front surface 110 and the rear surface 120. The side surface includes a first face 131, a second face 132, a third face 133, and a forth face 134 opposite to the third face 133. "Opposite to" herein can be understood by referring to the following example: along a direction of a thickness of the side surface 130 (i.e. the Y direction shown in Fig. 1), a hypothetical plane which passes through a center of the side surface 130 and is parallel with the XY plane is defined as a reference plane, and all points on the front surface 110 are located on one side of the reference plane and all points on the rear surface 120 are located on the other side of the reference plane. The first face 131 is connected between one end of each of the third face 133 and a forth face 134, the second face 132 is connected between the other end of each of the third face 133 and a forth face 134. The first face 131, the second face 132, the third face 133 and the forth face 134 are connected in sequence to form a closed rectangular frame. In an embodiment, a length of the third face 133 is greater than that of the first face 131. The first face 131 is located at top of mobile terminal 10. In an embodiment, a rounded corner transition is used in each of the connection between the first face 131 and the third face 133, and used in each of that between the first face 131 and the forth face 134, and used in each of that between the second face 132 and the third face 133, and used in each of that between the second face 132 and the forth face 134. In some other embodiments, a right angle transition, instead of a rounded corner transition, can be used in each of the connection between the first face 131 and the third face 133, and used in each of that between the first face 131 and the forth face 134, and used in each of that between the second face 132 and the third face 133, and used in each of that between the second face 132 and the forth face 134.

In an implementation, the body 100 includes a display 200. The display 200 includes a displayable area, and the displayable area includes a flat region. In an embodiment, the body 100 includes a glass cover covering the display 200. The whole or part of the front surface 110 is constituted by a side of the glass cover opposite to the displayable area of the display 200. The body 100 includes a middle frame 101 including two end surfaces, i.e. the front surface 110 and the rear surface 120. The side surface 130 of the body 100 is an external surface of the middle frame 101. The display 200 is fixed to the front surface 110 of the middle frame 101. Other assemblies of the mobile terminal 10, such as the camera mounting assembly 300 and the driving mechanism 400, can be positioned on the rear surface 120. In some embodiments, a control assembly including a mainboard and relevant circuits, or a power supply module, can be positioned on the rear surface 120. In an embodiment, the body 100 includes a rear housing 102, and the middle frame 101 is covered by the rear housing 102, so as to seal the above various assemblies mounted on the rear surface 120 of the middle frame 101.

The display 200 is configured to display information. The display 200 is a LCD (Liquid Crystal Display), or an OLED (Organic Light-Emitting Diode) display. In an embodiment, the display 200 is a touch display. A user can conduct operations on the touch screen to interact with the information displayed therein. In some other embodiments, the display 200 is not a touch screen and only configured to display information.

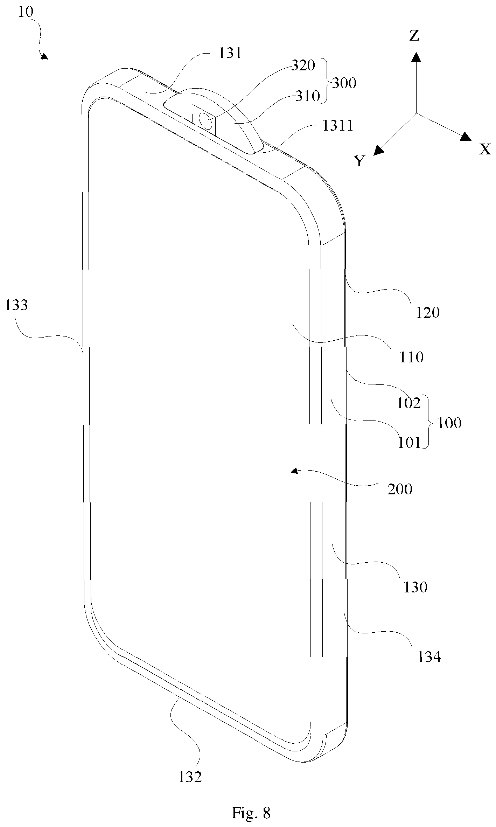

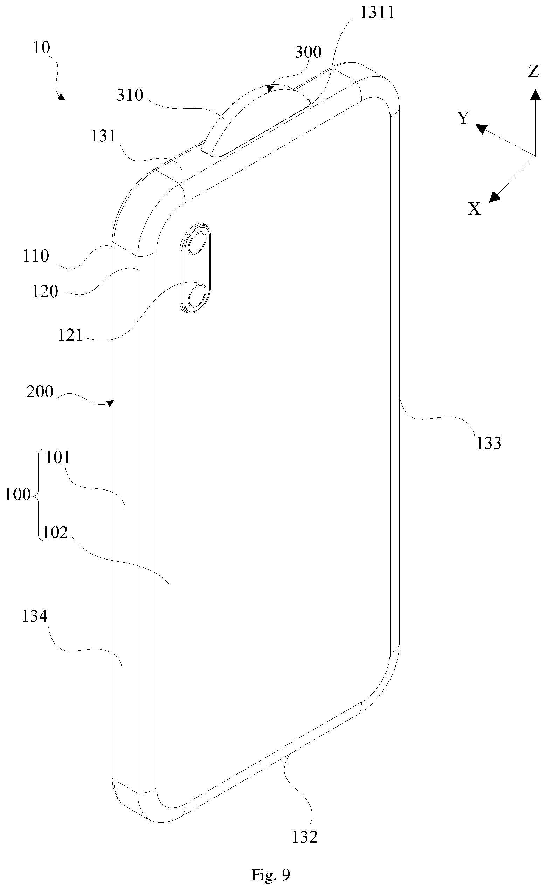

In an embodiment as shown in Figs. 8 and 9, the camera mounting assembly 300 includes a mounting base 310 and a camera 320 positioned in the mounting base 310. With the camera 320, the mobile terminal 10 can provide functions of video conference, photographing and so on. A dustproof glass can be positioned over an incident surface of the camera 320. It can be understood that, in some other embodiments, the camera mounting assembly can include a light intensity sensor or a flashlight, which is positioned in the mounting base 310 and configured to assist the camera 320 to acquire an image. The camera mounting assembly 300 may include an another component, such as an iris recognition module, a facial recognition module, a proximity sensor, an ambient light sensor, a microphone, a telephone receiver, a fingerprint recognition module, etc. The mounting base 310 can be, but not limited to, made of metal, plastic, or stainless steel.

Referring to Figs.1, 8 and 9, the mobile terminal 10 defines an accommodation slot 1311. In an embodiment, the mobile terminal 10 includes a body 100 defining the accommodation slot 1311. In an embodiment, the first face 131 defines the accommodationslot 1311. In addition, the accommodation slot 1311 may be defined at a middle portion of the first face and located between the front surface 110 and the rear surface 120. Of course, the accommodation slot 1311 can be defined at a peripheral of the first face 131 that is close to the rear surface 120. The mounting base 310 carrying the camera 320 can be moved from a first position shown in Fig. 1 to a second position shown in Figs. 8 and 9. The mounting base 310 and the camera 320 are received in the accommodation slot 1311 when the mounting base 310 is located in the first position, and an incident surface of the camera 320 is located out of the accommodation slot 1311, that is, the incident surface of the camera 320 is exposed out of the body 100, and then the camera can be used to photograph. When the photographing activities are over, the mounting base 310 carrying the camera 320 can be moved into the accommodation slot 1311, and thereby the space occupied by the camera 320 on the side of the display 200 can be eliminated, the coverage rate of the display 200 on the front surface of 110 can be increased, and screen-to-body ratio of the display 200 can be improved.

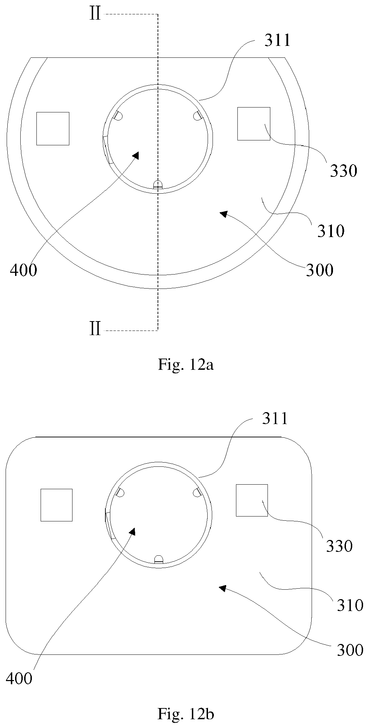

In an embodiment, the mounting base 310 is located in the accommodation slot 1311 and capable of rotating relative to the body 100. The mounting base 310 carrying the camera 320 is configured to move out of the accommodation slot 1311 and then the camera 320 is operable to photograph. In an embodiment, a rotation axis is perpendicular to a reference plane, and the reference is a plane in which the flat region of the display 200 is located. The reference plane can be construed as a plane which is perpendicular to a direction of thickness, that is, the reference plane is perpendicular to the Y axis shown in Fig. 1, and for example, may be the XY Plane. In some other embodiments, the rotation axis of the mounting base 310 passes through a center of a reference line, and the reference line is a line between two points which have a max distance in an orthographical projection of the mounting base 310 in the reference plane which is perpendicular to an optical axis of the camera 320 parallel with the rotation axis of the mounting base 310. For convenient description, reference planes in some embodiments are illustrated below. In an embodiment, the rotation axis of the mounting base 310 passes through a center of a circumscribed circle of an orthographic projection of the mounting base in the reference plane. In some other embodiments, the rotation axis passes through a center of a reference line, and the reference line is between two points which have a max distance in an orthographical projection of the mounting base 310 in the reference plane. As shown in Fig. 12a, when the orthographical projection of the mounting base 310 in the reference plane includes a shape of major arc, the max distance is a diameter of the circumscribed circle. As shown in 12b, when the orthographical projection of the mounting base 310 in the reference includes a rectangular region, the max distance is a diagonal line of the rectangular region. In some other embodiments, the orthographical projection of the mounting base 310 in the reference includes a rounded rectangular region, the reference line is a line between two points which are located in the rounded region and have a max distance therebetween.

An incident surface of the camera 320 may face the front surface 110, i.e., the incident surface of and the display 200 face a same direction when the camera 320 is a front camera. in an embodiment, an another camera 121 may be positioned on the rear surface 120 of the body 100, an incident surface of the another camera 121 is opposite to the front surface 110, i.e. opposite to the display 200, the another camera 121 in this scenario is used as a rear camera. It is noted that, in some other embodiments (not illustrated), the another camera 121 may be positioned at an end of the mounting base 310 which is away from the camera 320. When the camera is not in a photographing state, the front camera and the rear camera of the mobile terminal may be buried in the accommodation slot 1311. When the front camera or the rear camera is used to photograph, the mounting base 310 is rotated to a second position, and an incident surface of the camera 320 is exposed out of the body and faces a side where the display 200 is located, or an incident surface of the another camera is exposed out of the body and face a side opposite to the display 200.

The aforementioned camera 320 may communicate data in a wireless manner with a mainboard of a mobile terminal 10 through a chip positioned in the mounting base 310, or communicate data in a wired manner with a mainboard of a mobile terminal 10 through a flexible circuit or an elastic sheet. In an embodiment, as shown in Figs. 8 and 12a, the body 100 includes a first EHF (extremely high frequency) communication chip (not shown), and the camera mounting assembly 300 includes a second EHF (extremely high frequency) communication chip positioned in the mounting base 310. The camera 320 can communicate with the second EHF communication chip. When the mounting base is located in the second position, the second EHF communication chip can pair with the first EHF (extremely high frequency) communication chip in which case the first and second EHF communication chips can communicate with each other.

In an embodiment, each of the first second EHF communication chip and the second EHF communication chip 330 is a chip within which an EHF (extremely high frequency) antenna IC (Integrated Circuit) is embedded. Two EHF communication chips can pair with each other to communicate with each other when the two EHF communication chips get close enough. Terms comm-link chip, comm-link chip package, and EHF communication link chip package will be used to refer to EHF antennas embedded in IC packages. Examples of such comm-link chips are described in detail in U.S. Patent Application Publication Nos. 2012/0263244 and 2012/0307932, and the information provided in China Patent Application Publication Nos. CN103563166A and CN104145380A are available for reference.

Examples of EHF communication chips can be known in China Patent Announcement No. CN105264785B. An EHF communication chip is embedded with an EHF antenna. A camera equipped with an EHF communication chip can communicate with a mainboard of a mobile terminal if another EHF communication chip is positioned in the mainboard, and then high-speed wireless transmissions of data can be realized (for an example, at a rate up to 6GB/s) in a high carrier frequency (for example, 60GHz).

It is can be understood that, near field communication based on high frequency carrier has some advantages such as low power consumption, small volume, faster transfer rate, non-contact transmission and son, and supports plug and play functionality, and thus an improved signal integrity, a more flexible system implementation, low power consumption, a broader transmission bandwidth, a safer data transmission and a better compatibility with video signal can be obtained.

It is can be understood that, the high frequency is selected for purpose of achieving high speed data transmission. The transmission frequency can be a specified frequency, or a frequency band, for example, 30GHz-300GHz, and the transmission frequency is not limited in this application, and can selectively be 60 GHz.

As shown in Figs. 10 and 11, the driving mechanism is positioned in the body 100 and configured to drive the mounting base 310 to rotate relative to the body 100 within the accommodation slot 1311. In an embodiment, the driving mechanism 400 includes an actuator 410 and a gear driving structure 420. The actuator 410 is configured to drive the mounting base 310 to move from a first position to a second position through the gear driving structure 420. When the mounting base 310 is located in the first position, the mounting base 310 and the camera 320 are located within the accommodation slot 1311, and when the mounting base 31 is located in the second position, an incident surface of the camera 320 is exposed out of the body 100. It is noted that, when the mounting base 31 is located in the second position, the mounting base 310 can return to the accommodation slot 1311 under the action of the driving mechanism 400, and the mounting base 310 can be driven back to the accommodation slot 1311 by hand. The camera mounting assembly 300 and the gear driving structure 420 can form a camera mounting module . The camera mounting module can be separately produced and assembled, and configured to be mounted in a mobile terminal. It can be understood that, the camera mounting module and the actuator 410 can form the camera assembly , and the camera assembly can be separately produced and assembled, and configured to be mounted in a mobile terminal 10.

In an embodiment shown in Figs. 10 and 11, the actuator 410 includes an electromotor. The electromotor includes a seat 411 and a power-output shaft 412 connected to the seat 411. The gear driving structure includes a first gear 421, an internal gear 422 and at least one second gear 423. The at least one second gear 423 is located between the first gear 421 and the internal gear 422. The at least one second gear 423 is can be a multiple number of gears (e.g., at least three) and the multiple second gears 423 are uniformly-spaced arranged along the circumferential direction of the first gear 421. Each of the at least one second gear 423 is engaged with the first gear 421 and the internal gear 422. In an embodiment, a power-output shaft (i.e. the output shaft of the electromotor) of the actuator is coupled to the first gear 421, and the actuator 410 is configured to drive the mounting base 310 to move from the first position to the second position through the first gear 4221, the at least one second gear 423 and the internal gear 422. In some other embodiments, the power-output shaft of the actuator 410 is coupled to the at least one second gear 423, and the actuator 410 is configured to drive the mounting base 310 to move from the first position to the second position. In an embodiment, the gear driving structure 420 includes a mounting frame 424, the mounting frame 424 is connected to each of the at least one second gear 423. Furthermore, one of the mounting frame 424 and the at least one second gear 423 defines a positioning hole 4231, the other of the mounting frame 424 and the at least one second gear 423 is provided with a positioning shaft 4241, and the positioning shaft 4241 passes through the positioning hole 4231. In an embodiment, the at least one second gear 423 defines a positioning hole 4231 and the mounting frame 424 is provided with a positioning shaft 4241.

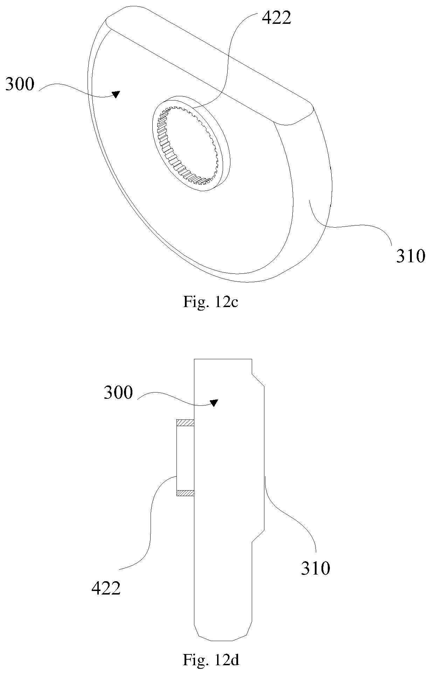

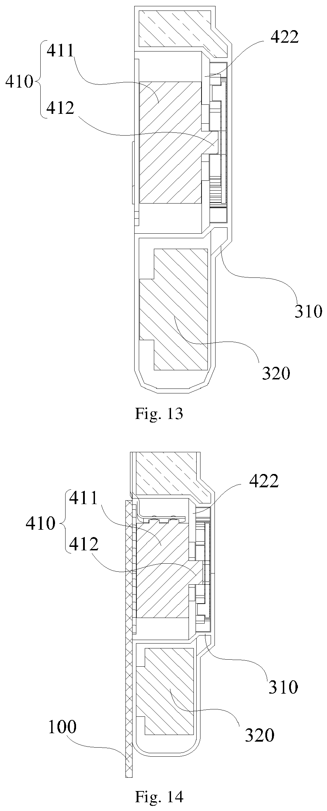

In order to enable the actuator 410 to drive the mounting base 310 to rotate relative to the body 100 within the accommodation slot 1311 through the gear driving structure 420. In an embodiment as shown in Figs. 12a, 13 and 14, the actuator 410 can be fixed to the body 100 by screw connection, riveting connection, soldering connection, or adhesion connection, for example, the actuator 410 is fixed to the middle frame, rear housing, or front housing of the mobile terminal, and the gear driving structure 420 is fixed to the mounting base 310. The seat 411 of the electromotor is fixed to the body 100, and the internal gear 422 of the gear driving structure is fixed to the mounting base 310. The internal gear 422 and the mounting base 310 are detachably connected or integrally formed. If the internal gear 422 and the mounting base 310 are integrally formed, the teeth of the internal gear 422 are formed in the mounting base 310 and can be regarded as part of the mounting base 310. In an embodiment, the mounting base 310 defines a mounting groove 311, and the internal gear 422 is positioned in the mounting groove 311 and connected to or coupled to a sidewall of the mounting groove 311. Furthermore, in an embodiment, the actuator 410 is wholly or partially positioned in the mounting groove 311 along a direction to which a rotation axis of the mounting base 310 extends, and the gear driving structure 420 is wholly or partially positioned in the mounting groove 311 along a direction to which a rotation axis of the mounting base 310 extends. The internal gear 422 may be fixed to (in an integrally-formed manner or a detachable manner) the sidewall of the mounting groove 311 by screw connection, riveting connection, soldering connection, or adhesion connection. Since the actuator 410 and the gear driving structure 420 are located in the mounting groove 311, the camera mounting assembly can be compact enough and thickness of the body 100 can be reduced. It can be understood that, in some other embodiments, as shown in Figs. 12c and 12d, the internal gear 422 is connected to an external surface of the mounting base 310, and thus no mounting groove 311 is defined in the mounting base 310, and the internal gear 422 and the external surface of the mounting base 310 can be integrally formed or detachably connected.

In an embodiment (not shown), the actuator 410 may be fixed to the mounting base 310, and the gear driving structure 420 may be fixed to the body 100. The seat 411 of the electromotor is fixed to the mounting base 310, and the internal gear 422 of the gear driving structure 420 is fixed to the body 100. In an embodiment, the actuator 410 is wholly or partially located in the mounting groove 311 along the direction to which a rotation axis of the mounting base extends, and the gear driving structure is wholly or partially located in the mounting groove 311 along the direction to which a rotation axis of the mounting base extends. Once the power-output shaft of the electromotor rotates, the mounting base 310 carrying the camera 320 can be rotated to the second position. The internal gear 422 and the body 100 are detachably connected or integrally formed.

The actuator 410 of the above-mentioned mobile terminal 10 can drive the mounting base 310 carrying the camera 320 to rotate relative to the body 100 through the gear driving structure 420. When the mounting base 310 is located in the first position, the camera 320 is received in the accommodation slot 1311, and when the mounting base 310 is located in the second position, the incident surface of the camera 320 is exposed out of the body 100, such that a user can choose to keep the camera 320 into the body 100 or get the camera 320 out of the body 100 depending on his personal demand. Therefore, the camera 320 will not occupy any extra space that is occupied by the display 200 or rear housing, the screen-to-body ratio or the integrity of the rear housing can be improved. In addition, the gear driving structure 200 may be used to split the output-power of the actuator 410 to reduce the starting inertia and obtain a greater output torque. The actuator 410 and gear driving structure 420 share the same power-output shaft, and thus the gear driving structure 200 is compact and will not occupy too much space within the body 100, and some space can be reserved for other components, which is conducive to the thin and light performance of the mobile terminal 10.

In an embodiment shown in Figs. 8, 10, and 12a, an orthographic projection of the mounting base 310 in the reference plane is a shape of major arc. In addition, a center of a circumscribed circle of an orthographic projection of the accommodation slot 1311 in the reference plane coincides with a center of a circumscribed circle of an orthographic projection of the mounting base 310, and thus the space of the accommodation slot 1311 can be used to the maximum extent, and the structure of the mobile terminal is more compact. It can be understood that, in some other embodiments shown in 12b, an orthographic projection of the mounting base in the reference plane includes is a rectangular shape, or a rounded rectangular shape.

Furthermore, in an embodiment shown in Figs. 1, 8 and 10, the mounting base 310 includes a first peripheral surface 312 and a second peripheral surface 313. An orthographic projection of the first peripheral surface 312 in the reference is a line, and that of the second peripheral surface 313 in the reference is an arc. When the mounting base 310 is located in the first position, the first peripheral surface 312 is flush with the first face 131, and when the mounting base is located in the second position, the first peripheral surface 312 is not flush with the first face 131. When the first peripheral surface 312 is not flush with the first face 131, the positional relationship between the first peripheral surface 312 and the first face 131 includes the two following scenarios: one is that the first peripheral surface 312 intersects with the first face 131, the other is that the first peripheral surface 312 is parallel with the first face 131. Taking Fig. 8 as an example, when the mounting base 310 is located in the second position, the first peripheral surface 312 is parallel with the first face 110. After the mounting base is rotated 180 degrees, the mounting base 310 is moved from the first position to the second position, and the orthographic projection of the mounting base 310 in the reference plane when the mounting base 310 is located in the first position and that of the mounting base 310 in the reference when in second position are centrosymmetric with respect to the center of the orthographic projection of the mounting base 310 in the reference plane. It is understood that, in some embodiments, when the mounting base 310 is located in the second position or when the mounting base 310 is rotated less than 180 degrees from the first position to a second position, the first peripheral surface 312 may intersect with the first face 110. It can be understood that, to what degree the mounting base 310 is rotated from the first position to the second position depends on a practical demand and is not limited herein, only if the rotation of the mounting base 310 can expose the incident surface of the camera out of a side of the body at which the display 200 is located.

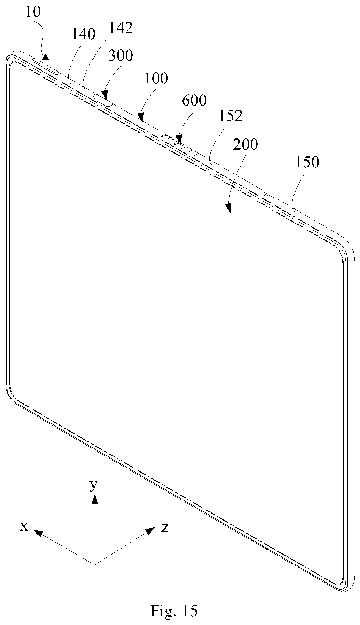

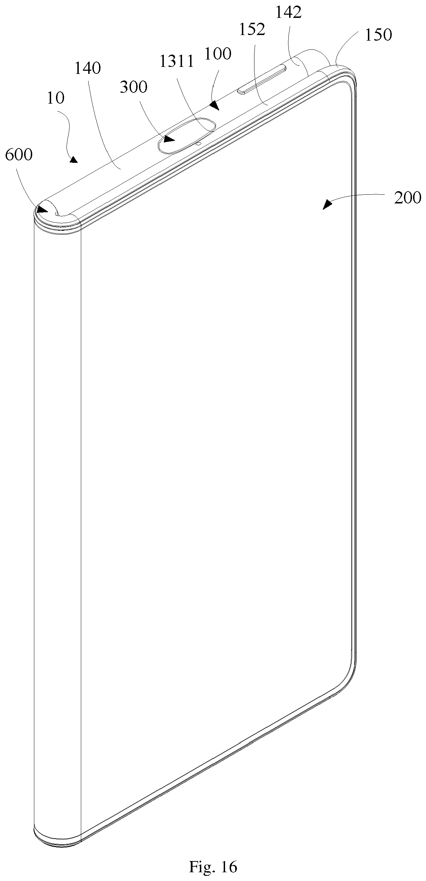

In an unclaimed embodiment, referring to Figs. 15 and 16, the mobile terminal 10 in the disclosure may be a foldable mobile terminal. The foldable mobile terminal includes a foldable mechanism 600. The display 200 is a flexible display. The body 100 includes a first housing assembly 140 and a second housing assembly 150. The foldable mechanism is coupled to and between the first housing assembly 140 and the second housing assembly 150. The first housing assembly 140 is configured to rotate with respect to the second housing assembly 150 through the foldable mechanism 600, and the flexible display can be folded or unfolded. Referring to Fig. 15, when the flexible display 200 is unfolded, the foldable mobile terminal will have a performance of large display screen. Referring to Fig. 16, when the foldable mobile terminal 10 is folded, the flexible display 200 is exposed out of the first housing assembly 140 and the second housing assembly 150. In the folded state, the user can still use the foldable mobile terminal. It can be understood that, in some unclaimed embodiments, the flexible display is configured to be hidden between the first and second housing assembly when the foldable mobile terminal is folded, and the flexible display will not be exposed out of the first and second housing assemblies.

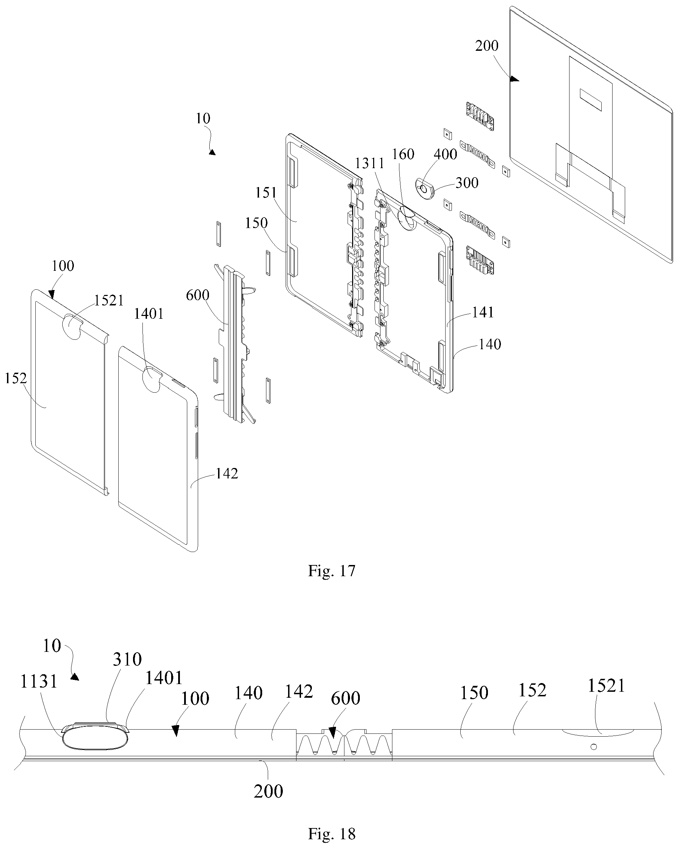

The first housing assembly 140 defines an accommodation slot 1311. In an unclaimed embodiment shown in Fig. 17, the first housing assembly defines a protrusion 160. The accommodation slot 1311 is defined in the protrusion 160. The first housing assembly 140defines an opening 1401 and the accommodation slot 1311 communicates with the opening 1401. In addition, in the unclaimed embodiment, the first housing assembly 140 includes a first front housing 141 and a first rear housing 142. The first front housing 141 is located between the first rear housing 142 and the flexible display. The second housing 150 includes a second front housing 151 and a second rear housing 152. The second housing 151 is located between the second rear housing 152 and the flexible display. The foldable assembly 600 is coupled to and between the first front housing 141 and the second front housing 151. The protrusion 160 is connected to the first front housing 141, and the first rear housing 142 defines the opening 1401 which communicates with the accommodation slot 1311. It can be understood that, in some unclaimed embodiments, the protrusion 160 may be connected to the first rear housing 142 or connected to both the first front housing 141 and the first rear housing 142. Space for battery is defined by and between the first front housing 141 and the first rear housing 142, and another space for a mainboard is defined by and between the second front housing 151 and the second rear housing 152. In addition, in an unclaimed embodiment, the first front housing 141 includes a middle board. The first rear housing 142, the foldable assembly 600 and the flexible display are connected to the middle board, respectively, and the protrusion 160 and the middle board are integrally formed.

In an unclaimed embodiment, the mounting base 310 is located in the accommodation slot 1311 and configured to rotate relative to the first housing assembly 140. The mounting base 310 is configured to carry the camera 320 and rotate out of the accommodation slot 1311, and then photographing functionality of the camera 320 can be realized. In an unclaimed embodiment, the flexible display includes a flat region. A rotation axis of the mounting base 310 is perpendicular to a reference plane, and the reference plane is a plane in which the flat region is located, that is to say, the rotation axis of the mounting base 310 is perpendicular to the thickness direction of the first housing assembly 140, and perpendicular to the incident surface of the camera 320. In addition, in an unclaimed embodiment, a rotation axis of the mounting base 310 passes through a center of a circumscribed circle of the orthographic projection of the mounting base 310 in the reference plane. The reference line is a line between two points which have a max distance in an orthographic projection of the mounting base 310 in the reference plane. For an example, if an orthographic projection of the mounting base 310 in the reference includes a major arc region, the max distance is the diameter of circumscribed circle of the major arc region. If an orthographic projection of the mounting base 310 in the reference includes a rectangular region, the max distance is a diagonal of the rectangular region. In some unclaimed embodiments, an orthographic projection of the mounting base 310 includes a rounded rectangular, and the reference line is the line between two points which have a max distance in the rounded rectangular region.

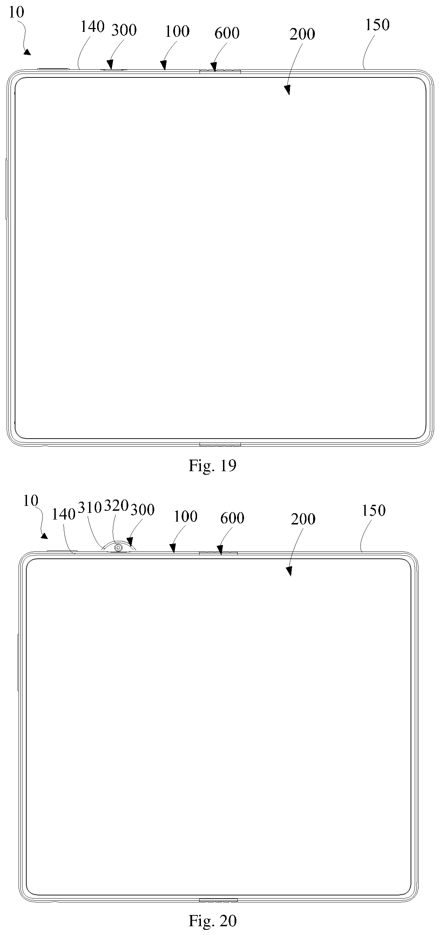

In an unclaimed embodiment, the driving mechanism 400 is positioned in the first housing assembly 140. The actuator 410 is fixed to the first housing assembly 140. The internal gear 422 is positioned in the mounting base 310. The mounting base 310 is configured to be driven by the actuator 410 to rotate from the first position shown in Fig. 19 to the second position shown in Fig. 20. When the mounting base 310 is located in the first position, the mounting base 310 and the camera 320 is received in the accommodation slot 1311, when the mounting base 310 is located in the second position, an incident surface of the camera 320 is exposed out of the first housing assembly 140. It can be understood that, in some embodiments, the actuator 410 is fixed to the mounting base 310, and the internal gear 422 is positioned in the first housing assembly 140, and the mounting base 310 can also be rotated to the second position.

In an unclaimed embodiment, when the flexible mobile terminal 10 is unfolded, the incident surface of the camera 320 and the flexible display face a same side and the camera 320 is used as a front camera. It can be understood that, in some unclaimed embodiments, when the flexible mobile terminal 10 is unfolded, the incident surface of the camera 320 and the flexible display face two opposite sides, and the camera 320 is used as a rear camera. It is noted that, when the flexible mobile terminal 10 is unfolded, no matter whether the incident surface of the camera 320 and the flexible display face a same side, or the incident surface of the camera 320 and the flexible display face two opposite sides, when the flexible mobile terminal 10 is folded, the camera 320 can be used as not only a front camera but also a rear camera.

In an unclaimed embodiment shown in Fig. 18, the mounting base 310 stretches out of the opening 1401 and protrudes from a side of the first rear housing that is opposite to the flexible display, and the second rear housing 152 defines a receiving groove 1521. Referring to Fig. 16, when the flexible mobile terminal 10 is folded, a portion of the mounting base 310 which protrudes from the first rear housing can be received in the receiving groove 1521. The existence of the receiving groove 1521 is conducive to reduce the thickness of the flexible mobile terminal 10 when the flexible mobile terminal is folded, and makes it easy to carry and use the flexible mobile terminal. It is noted that, when the flexible mobile terminal is folded, the actuator 410 can also drive the mounting base 310 carrying the camera 320 to rotate to the second position.

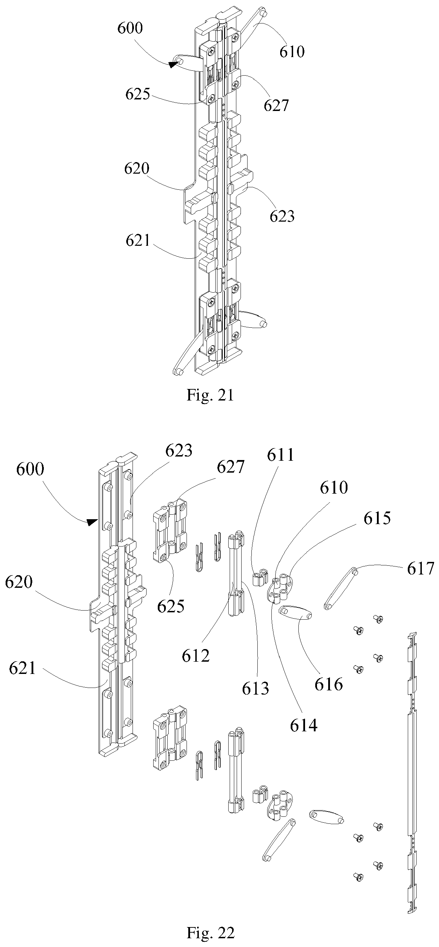

As shown in Figs. 21 and 22, in an unclaimed embodiment, the foldable mechanism 600 includes a foldable assembly 610 and a sliding assembly 620. The sliding assembly 620 includes a first sliding block 621, a second sliding block 623, a first bracket 625 and a second bracket 627. The foldable assembly includes a shaft sleeve 611, a first rotating shaft 612, a second rotating shaft 613, a first connector 614, a second connector 615, a first connecting rod 616 and a second connecting rod 617. The first rotating shaft 612 is connected to the first sliding block 621, and the second rotating shaft 613 is connected to the second sliding block 623. The shaft sleeve 611 is penetrated by the first rotating shaft 612 and the second rotating shaft 613, respectively. The first connecting rod 616 is connected to the first connector 614 and the first front housing 141. The second connecting rod 617 is connected to the second connector 615 and a second front housing 151. The first connector 614 is penetrated by the first rotating shaft 612, and the second connector 615 is penetrated by the second rotating shaft 613. The first bracket 625 is connected to the first sliding block 621 and covers the first connecting rod 616. The second bracket 627 is connected to the second sliding block 623 and covers the second connecting rod 617. The first sliding block 621 is at least partially accommodated between the first front housing 141 and the first rear housing 142, and the second sliding block 623 is at least partially accommodated between the second front housing 151 and the second rear housing 152.

Referring to Fig. 15, a coordinate system is built by taking the length direction, width direction and thickness direction as the X axis, Y axis and Z axis, respectively. During the flexible mobile terminal being folded, the first housing assembly 140 drives the first connector 614 to rotate relative to the first rotating shaft 612 through the first connecting rod 616 and the first sliding block 621. The first connector 614 slides relative to the first rotating shaft 612, and thus a length of an orthographic projection of the first connecting rod 616 along the length direction of the flexible mobile terminal (i.e. the X axis direction) decreases, and the first sliding block 621 slides on the first rear housing 142 and then enters into the first housing assembly 140

the second housing assembly 150 drives the second connector 615 to rotate relative to the second rotating shaft 613 through the second connecting rod 617 and the second sliding block 623. The second connector 615 slides relative to the second rotating shaft 613, and thus a length of an orthographic projection of the second connecting rod 617 along the length direction of the flexible mobile terminal decreases, and the second sliding block 623 slides on the second rear housing 152 and then enters into the second housing assembly 150. The distance between the first rear housing assembly and the second rear housing assembly decreases along the length direction of the flexible mobile terminal, and then the flexible mobile terminal can be easily folded. During the flexible mobile terminal being unfolded, the first housing assembly 140 drives the first connector 614 to rotate relative to the first rotating shaft 612 through the first connecting rod 616 and the first sliding block 621. The first connector 614 slides relative to the first rotating shaft 612, and thus a length of an orthographic projection of the first connecting rod 616 along the length direction of the flexible mobile terminal (i.e. the X axis direction) increases, and the first sliding block 621 slides on the first rear housing 142 and then slides out of the first housing assembly 140.

The second housing assembly 150 drives the second connector 615 to rotate relative to the second rotating shaft 613 through the second connecting rod 617 and the second sliding block 623. The second connector 615 slides relative to the second rotating shaft 613, and thus a length of an orthographic projection of the second connecting rod 617 along the length direction of the flexible mobile terminal increases, and the second sliding block 623 slides on the second rear housing 152 and then slides out of the second housing assembly 150. The distance between the first rear housing 142 and the second rear housing 152 increases along the length direction of the flexible mobile terminal, and then the flexible mobile terminal can be easily unfolded. In an unclaimed embodiment, the first housing assembly 140 and the second housing assembly 150 are located in two opposite sides of the foldable mechanism 600 and symmetric with respect to the foldable mechanism 600, and thus the foldable mobile terminal can be unfolded or folded into two same size layers, and the aesthetic and utility of the mobile terminal may be improved.

The approaches by which the driving mechanism 400 controls the camera mounting assembly 300 can be illustrated as follows:

At least one triggering key can be positioned on the side surface 130. The at least one triggering key is connected to a mainboard of the mobile terminal 10. When the at least one triggering key is pressed by a user, the at least one triggering key transmits a signal to a processor mounted in the mainboard, and the processor controls the driving mechanism 400, and then the mounting base 310 is driven to be received in the accommodation 1311 or move out of the accommodation slot 1311 under the control of the driving mechanism 400.

In an unclaimed embodiment, when a user uses the camera 320 to photograph, the user may press the at least one triggering key and then the mounting base 310 will be rotated to a designated position (for example, the second position) under the control of the driving mechanism 400, and at the same time, the driving mechanism 400 stops working, and the user may use the camera 320 for video chat or self-photographing. When the camera 320 is not used for photographing, the user may press the triggering key again, and the mounting base 310 will get back to the accommodation slot 1311 under the control of the driving mechanism 400. Of course, the at least one triggering key may be two, one is used to trigger the mounting base 310 to be rotated to a designated position, the other is used to trigger the mounting base 310 to get back to the accommodation slot 1311 under control of the driving mechanism 400.

In some unclaimed embodiments, the at least one triggering key may be at least one icon displayed in the display screen. When the at least one icon is clicked, a related control signal will be transmitted to a processor of the mainboard, and the processor will conducts related orders based on the received control signal, and then the mounting base 310 will be driven by the driving mechanism 400 to rotate into or move out of the accommodation slot 1311

For example, the at least one triggering icon may include an icon for starting to photograph and an icon for stopping photographing. When the icon for starting to photograph is clicked, a first triggering signal will be transmitted to a processor of the mainboard, and the processor will conducts related orders based on the first triggering signal, and then the mounting base 310 will be driven by the driving mechanism 400 to rotate into a designated position (for example, the second position) which is located out of the accommodation slot 1311. When the icon for stopping photographing is pressed, a second triggering signal will be transmitted to a processor of the mainboard, and the processor will conducts related orders based on the second triggering signal, and then the mounting base 310 will be driven by the driving mechanism 400 to rotate into the accommodation slot 1311.

The embodiments mentioned above can be arbitrarily combined, for brief description, not all combinations of technical elements disclosed in the embodiments mentioned above are described in detail.

The embodiments mentioned above are partial embodiments of the disclosure and are described in detail. However, they shall not be considered as limitations to the disclosure. It is noted that, some variations and improvements may be obtained by those skilled in the art. Consequently, the protection scope of the disclosure shall be subject to the attached claims.

## Claims

1. A mobile terminal (10), comprising:
a body (100) comprising a display (200) and defining an accommodation slot (1311);
a camera mounting assembly (300) comprising a mounting base (310) and a camera (320) positioned in the mounting base (310), the mounting base (310) being positioned in the accommodation slot (1311) and capable of rotating within the accommodation slot (1311);
**characterized by** further comprising:
an internal gear (422) coupled to the mounting base (310); and
a driving mechanism (400) comprising an actuator (410), a first gear (421) and at least one second gear (423), the at least one second gear (423) being arranged between the first gear (421) and the internal gear (422), the first gear (421) and the at least one second gear (423) being located within the internal gear (422), and each of the at least one second gear (423) being respectively engaged with the first gear (421) and the internal gear (422);
wherein the actuator (410) is configured to drive the mounting base (310) to rotate from a first position to a second position through the first gear (421), the at least one second gear (423) and the internal gear (422), the camera (320) is received in the accommodation slot (1311) when the mounting base (310) is located in the first position, and an incident surface of the camera (320) is exposed out of the body (100) when the mounting base (310) is located in the second position.

2. The mobile terminal (10) as claimed in claim 1, wherein the mounting base (310) defines a mounting groove (311), the internal gear (422) is positioned in the mounting groove (311) and coupled to a sidewall of the mounting groove (311).

3. The mobile terminal (10) as claimed in claim 2, wherein the driving mechanism (400) is wholly positioned within the mounting groove (311) along a direction to which a rotation axis of the mounting base (310) extends, or the driving mechanism (400) is partially positioned in the mounting groove (311) along a direction to which a rotation axis of the mounting base (310) extends.

4. The mobile terminal (10) as claimed in claim 2, wherein the internal gear (422) and the mounting base (310) are integrally formed, or the internal gear (422) and the mounting base (310) are detachably coupled.

5. The mobile terminal (10) as claimed in claim 1, wherein the internal gear (422) is positioned on an external surface of the mounting base (310).

6. The mobile terminal (10) as claimed in claim 5, wherein the internal gear (422) and the mounting base (310) are integrally formed, or the internal gear (422) and the mounting base (310) are detachably coupled.

7. The mobile terminal (10) as claimed in claim 1, wherein the actuator (410) is fixed to the mounting base (310), the internal gear (422) is fixed to the body (100).

8. The mobile terminal (10) as claimed in claim 7, wherein the internal gear (422) and the mounting base (310) are integrally formed, or the internal gear (422) and the mounting base (310) are detachably coupled.

9. The mobile terminal (10) as claimed in claim 1, wherein the first gear (421) is coupled to a power-output shaft of the actuator (410), or the at least one second gear (423) is coupled to a power-output shaft of the actuator (410).

10. The mobile terminal (10) as claimed in claim 1, when the mounting base (310) is located in the second position, the incident surface of the camera (320) is exposed out of a surface of the body (100) on which the display (200) is located.

11. The mobile terminal (10) as claimed in claim 1, when the mounting base (310) is located in the second position, the incident surface of the camera (320) is exposed out of a surface of the body (100) opposite to the display (200).

12. The mobile terminal (10) as claimed in claim 1, wherein the number of the at least one second gear (423) is three or more, all of the at least one second gear (423) are uniformly-spaced arranged along a circumferential direction of the first gear (421).

13. The mobile terminal (10) as claimed in claim 1, wherein the driving mechanism (400) comprises a mounting frame (424), one of the mounting frame (424) and the at least one second gear (423) defines a positioning hole (4231), the other of the mounting frame (424) and the at least one second gear (423) is provided with a positioning shaft (4241), and the positioning shaft (4241) passes through the positioning hole (4231).

14. The mobile terminal (10) as claimed in claim 1, wherein an orthographic projection of the mounting base (310) in a reference plane is a shape of major arc.

15. The mobile terminal (10) as claimed in any one of claims 1-14, wherein the body (100) comprises a first EHF chip, the camera mounting assembly (300) comprises a second EHF chip positioned in the mounting base (310), and the second EHF chip is configured to communicate with the camera (320); when the mounting base (310) is located in the second position, the second EHF chip pairs with the first EHF chip in which case the first EHF chip can communicate with the second EHF chip.

## Patentansprüche

1. Mobiles Endgerät (10), umfassend:
einen Körper (100), eine Anzeige (200) umfassend und einen Aufnahmeschlitz (1311) definierend;
eine Kamerabefestigungsanordnung (300), umfassend eine Befestigungsbasis (310) und eine in der Befestigungsbasis (310) angeordnete Kamera (320), wobei die Befestigungsbasis (310) im Aufnahmeschlitz (1311) angeordnet ist und sich im Aufnahmeschlitz (1311) drehen kann;
**dadurch gekennzeichnet, dass** es ferner umfasst:
ein Innenzahnrad (422), gekoppelt mit der Befestigungsbasis (310); und
einen Antriebsmechanismus (400), umfassend einen Aktuator (410), ein erstes Zahnrad (421) und mindestens ein zweites Zahnrad (423), wobei das mindestens eine zweite Zahnrad (423) zwischen dem ersten Zahnrad (421) und dem Innenzahnrad (422) angeordnet ist, wobei sich das erste Zahnrad (421) und das mindestens eine zweite Zahnrad (423) innerhalb des Innenzahnrads (422) befinden und jedes des mindestens einen zweiten Zahnrads (423) jeweils mit dem ersten Zahnrad (421) und dem Innenzahnrad (422) in Eingriff steht,
wobei der Aktuator (410) dazu konfiguriert ist, die Befestigungsbasis (310) über das erste Zahnrad (421), das mindestens eine zweite Zahnrad (423) und das Innenzahnrad (422) anzutreiben, sich von einer ersten Position in eine zweite Position zu drehen, die Kamera (320) im Aufnahmeschlitz (1311) aufgenommen wird, wenn sich die Befestigungsbasis (310) in der ersten Position befindet, und eine Einfalloberfläche der Kamera (320) aus dem Körper (100) heraus freiliegt, wenn die Befestigungsbasis (310) sich in der zweiten Position befindet.

2. Mobiles Endgerät (10) nach Anspruch 1, wobei die Befestigungsbasis (310) eine Befestigungsnut (311) definiert, das Innenzahnrad (422) in der Befestigungsnut (311) angeordnet und mit einer Seitenwand der Befestigungsnut (311) gekoppelt ist.

3. Mobiles Endgerät (10) nach Anspruch 2, wobei der Antriebsmechanismus (400) vollständig innerhalb der Befestigungsnut (311) entlang einer Richtung angeordnet ist, in die sich eine Drehachse der Befestigungsbasis (310) erstreckt, oder der Antriebsmechanismus (400) teilweise in der Befestigungsnut (311) entlang einer Richtung angeordnet ist, in die sich eine Drehachse der Befestigungsbasis (310) erstreckt.

4. Mobiles Endgerät (10) nach Anspruch 2, wobei das Innenzahnrad (422) und die Befestigungsbasis (310) einstückig ausgebildet sind oder das Innenzahnrad (422) und die Befestigungsbasis (310) lösbar gekoppelt sind.

5. Mobiles Endgerät (10) nach Anspruch 1, wobei das Innenzahnrad (422) auf einer Außenoberfläche der Befestigungsbasis (310) angeordnet ist.

6. Mobiles Endgerät (10) nach Anspruch 5, wobei das Innenzahnrad (422) und die Befestigungsbasis (310) einstückig ausgebildet sind oder das Innenzahnrad (422) und die Befestigungsbasis (310) lösbar gekoppelt sind.

7. Mobiles Endgerät (10) nach Anspruch 1, wobei der Aktuator (410) an der Befestigungsbasis (310) befestigt ist, das Innenzahnrad (422) am Körper (100) befestigt ist.

8. Mobiles Endgerät (10) nach Anspruch 7, wobei das Innenzahnrad (422) und die Befestigungsbasis (310) einstückig ausgebildet sind oder das Innenzahnrad (422) und die Befestigungsbasis (310) lösbar gekoppelt sind.

9. Mobiles Endgerät (10) nach Anspruch 1, wobei das erste Zahnrad (421) mit einer Leistungsabtriebswelle des Aktuators (410) gekoppelt ist oder das mindestens eine zweite Zahnrad (423) mit einer Leistungsabtriebswelle des Aktuators (410) gekoppelt ist.

10. Mobiles Endgerät (10) nach Anspruch 1, wobei, wenn sich die Befestigungsbasis (310) in der zweiten Position befindet, die Einfalloberfläche der Kamera (320) außerhalb einer Oberfläche des Körpers (100), auf der sich die Anzeige (200) befindet, freiliegt.

11. Mobiles Endgerät (10) nach Anspruch 1, wobei, wenn sich die Befestigungsbasis (310) in der zweiten Position befindet, die Einfalloberfläche der Kamera (320) außerhalb einer Oberfläche des Körpers (100) gegenüber der Anzeige (200) freiliegt.

12. Mobiles Endgerät (10) nach Anspruch 1, wobei die Anzahl des mindestens einen zweiten Zahnrads (423) drei oder mehr beträgt, alle des mindestens einen zweiten Zahnrads (423) in gleichmäßigen Abständen entlang einer Umfangsrichtung des ersten Zahnrads (421) angeordnet sind.

13. Mobiles Endgerät (10) nach Anspruch 1, wobei der Antriebsmechanismus (400) einen Befestigungsrahmen (424) umfasst, wobei eines von dem Befestigungsrahmen (424) und dem mindestens einen zweiten Zahnrad (423) ein Positionierungsloch (4231) definiert, das andere von dem Befestigungsrahmen (424) und dem mindestens einem zweiten Zahnrad (423) mit einer Positionierungswelle (4241) versehen ist und die Positionierungswelle (4241) durch das Positionierungsloch (4231) hindurch verläuft.

14. Mobiles Endgerät (10) nach Anspruch 1, wobei eine orthographische Projektion der Befestigungsbasis (310) in einer Bezugsebene die Form eines großen Bogens hat.

15. Mobiles Endgerät (10) nach einem der Ansprüche 1-14, wobei der Körper (100) einen ersten EHF-Chip umfasst, die Kamerabefestigungsanordnung (300) einen zweiten EHF-Chip umfasst, der in der Befestigungsbasis (310) angeordnet ist, und der zweite EHF-Chip zum Kommunizieren mit der Kamera (320) konfiguriert ist; wenn sich die Befestigungsbasis (310) in der zweiten Position befindet, der zweite EHF-Chip eine Kopplung mit dem ersten EHF-Chip eingeht, wobei in diesem Fall der erste EHF-Chip mit dem zweiten EHF-Chip kommunizieren kann.

## Revendications

1. Terminal mobile (10), comprenant :
un corps (100) comprenant un dispositif d'affichage (200) et définissant une fente de logement (1311) ;
un ensemble de montage de caméra (300) comprenant une base de montage (310) et une caméra (320) positionnée dans la base de montage (310), la base de montage (310) étant positionnée dans la fente de logement (1311) et pouvant tourner dans la fente de logement (1311) ;
**caractérisé en ce qu'**il comprend en outre :
un engrenage interne (422) couplé à la base de montage (310) ; et
un mécanisme d'entraînement (400) comprenant un actionneur (410), un premier engrenage (421) et au moins un deuxième engrenage (423), l'au moins un deuxième engrenage (423) étant disposé entre le premier engrenage (421) et l'engrenage interne (422), le premier engrenage (421) et l'au moins un deuxième engrenage (423) étant situés à l'intérieur de l'engrenage interne (422), et chacun de l'au moins un deuxième engrenage (423) étant respectivement en prise avec le premier engrenage (421) et l'engrenage interne (422) ;
l'actionneur (410) étant configuré pour entraîner la base de montage (310) à tourner d'une première position à une seconde position à travers le premier engrenage (421), l'au moins un deuxième engrenage (423) et l'engrenage interne (422), la caméra (320) étant reçue dans la fente de logement (1311) lorsque la base de montage (310) est située dans la première position, et une surface incidente de la caméra (320) étant exposée hors du corps (100) lorsque la base de montage (310) est située dans la seconde position.

2. Terminal mobile (10) selon la revendication 1, la base de montage (310) définissant une rainure de montage (311), l'engrenage interne (422) étant positionné dans la rainure de montage (311) et couplé à une paroi latérale de la rainure de montage (311).

3. Terminal mobile (10) selon la revendication 2, le mécanisme d'entraînement (400) étant entièrement positionné dans la rainure de montage (311) le long d'une direction vers laquelle s'étend un axe de rotation de la base de montage (310), ou le mécanisme d'entraînement (400) étant partiellement positionné dans la rainure de montage (311) le long d'une direction vers laquelle s'étend un axe de rotation de la base de montage (310).

4. Terminal mobile (10) selon la revendication 2, l'engrenage interne (422) et la base de montage (310) étant formés d'un seul tenant, ou l'engrenage interne (422) et la base de montage (310) étant couplés de manière amovible.

5. Terminal mobile (10) selon la revendication 1, l'engrenage interne (422) étant positionné sur une surface externe de la base de montage (310).

6. Terminal mobile (10) selon la revendication 5, l'engrenage interne (422) et la base de montage (310) étant formés d'un seul tenant, ou l'engrenage interne (422) et la base de montage (310) étant couplés de manière amovible.

7. Terminal mobile (10) selon la revendication 1, l'actionneur (410) étant fixé à la base de montage (310), l'engrenage interne (422) étant fixé au corps (100).

8. Terminal mobile (10) selon la revendication 7, l'engrenage interne (422) et la base de montage (310) étant formés d'un seul tenant, ou l'engrenage interne (422) et la base de montage (310) étant couplés de manière amovible.

9. Terminal mobile (10) selon la revendication 1, le premier engrenage (421) étant couplé à un arbre de sortie de puissance de l'actionneur (410), ou l'au moins un deuxième engrenage (423) étant couplé à un arbre de sortie de puissance de l'actionneur (410).

10. Terminal mobile (10) selon la revendication 1, lorsque la base de montage (310) est située dans la seconde position, la surface incidente de la caméra (320) étant exposée hors d'une surface du corps (100) sur laquelle se trouve le dispositif d'affichage (200).

11. Terminal mobile (10) selon la revendication 1, lorsque la base de montage (310) est située dans la seconde position, la surface incidente de la caméra (320) étant exposée hors d'une surface du corps (100) opposée au dispositif d'affichage (200).

12. Terminal mobile (10) selon la revendication 1, le nombre de l'au moins un deuxième engrenage (423) étant de trois ou plus, tous les au moins un deuxième engrenage (423) étant uniformément espacés agencés le long d'une direction circonférentielle du premier engrenage (421).

13. Terminal mobile (10) selon la revendication 1, le mécanisme d'entraînement (400) comprenant un cadre de montage (424), l'un du cadre de montage (424) et de l'au moins un deuxième engrenage (423) définissant un trou de positionnement (4231), l'autre du cadre de montage (424) et de l'au moins un deuxième engrenage (423) étant pourvus d'un arbre de positionnement (4241), et l'arbre de positionnement (4241) passant à travers le trou de positionnement (4231).

14. Terminal mobile (10) selon la revendication 1, une projection orthographique de la base de montage (310) dans un plan de référence étant une forme d'arc majeur.

15. Terminal mobile (10) selon l'une des revendications 1 à 14, le corps (100) comprenant une première puce EHF, l'ensemble de montage de la caméra (300) comprenant une seconde puce EHF positionnée dans la base de montage (310), et la seconde puce EHF étant configurée pour communiquer avec la caméra (320) lorsque la base de montage (310) est située dans la seconde position, la seconde puce EHF s'appariant avec la première puce EHF, auquel cas la première puce EHF peut communiquer avec la seconde puce EHF.
